Europäisches Patentamt

(19) European Patent Office

Office européen des brevets

(11) Numéro de publication: **0 156 695**

**A1**

# (12) DEMANDE DE BREVET EUROPEEN

(21) Numéro de dépôt: **85400364.7**

(22) Date de dépôt: **27.02.85**

(51) Int. Cl.⁴: **F 27 B 3/16**
**C 01 B 31/08**

(30) Priorité: **28.02.84 FR 8403074**

(43) Date de publication de la demande:
**02.10.85 Bulletin 85/40**

(84) Etats contractants désignés:
**AT BE CH DE FR GB IT LI LU NL SE**

(71) Demandeur: **KREBS & CO. S.A. Société anonyme dite:**
**8 rue J.P. Timbaud**
**F-78 390 Bois D'arcy(FR)**

(72) Inventeur: **Berckmoes, Frédéric**
**25, Domaine de la Futaie**
**F-78760 Jours-Pontchartrain(FR)**

(74) Mandataire: **Combe, André et al,**
**CABINET BEAU DE LOMENIE 55 rue d'Amsterdam**
**F-75008 Paris(FR)**

(54) **Procédé et dispositif pour la régénération du charbon actif en poudre.**

(57) La présente invention concerne un procédé pour réaliser la régénération de charbon actif en poudre par utilisation d'un four annulaire à sole tournante, ledit four comportant les adaptations suivantes:

— le déplacement de la sole s'effectue avec une vitesse contrôlée,

— le dispositif d'alimentation de la sole en charbon actif est étanche,

— le chauffage du four est réalisé à l'aide de dispositifs non générateurs de gaz,

— les moyens pour la réalisation de l'étanchéité entre le caisson extérieur du four et la sole sont avantageusement couplés avec les moyens nécessaires pour réaliser une trempe du charbon traité,

— le système d'évacuation des gaz générés pendant le traitement dans le four est situé, dans le four, au niveau des moyens permettant la décharge du charbon actif, ledit système d'évacuation assurant une circulation des gaz à co-courant par rapport au charbon,

— un système d'étanchéité est prévu, afin de stopper la circulation des gaz générés, entre les moyens d'alimentation et les moyens de décharge,

— enfin le four est équipé d'un dispositif, convenablement positionné, permettant l'injection de vapeur d'eau dans le four.

Fig.1

Croydon Printing Company Ltd

# PROCEDE ET DISPOSITIF POUR LA REGENERATION DE CHARBON ACTIF EN POUDRE.

La présente invention concerne un procédé et un dispositif - four - pour la régénération de charbon actif en poudre.

Le charbon actif est très souvent utilisé dans de nombreuses industries pour son pouvoir absorbant ; il se présente soit sous forme de granulés (granulométrie comprise entre 0,5 et 2,5 mm) ou d'une poudre (granulation comprise entre environ 80 et 150 micromètres). Dans cette utilisation, le charbon actif, produit relativement coûteux, devrait pouvoir être récupéré par une régénération. Des systèmes de récupération existent pour la régénération du charbon actif granulé : mais, lorsque l'on veut régénérer du charbon actif en poudre, on se heurte à un certain nombre de difficultés techniques provenant, d'une part, des dangers de manipulation de la poudre à haute température, d'autre part, du pouvoir abrasif élevé de ce charbon actif et, enfin, des pertes dues aux manipulations lors de la régénération.

On a par ailleurs décrit pour le grillage de matériaux pulvérulents (minerais) des fours tournants de forme annulaire présentant un certain nombre de dispositifs technologiques particuliers concernant le chargement, le déchargement et le chauffage des matériaux et l'étanchéité du four.

Il a été trouvé, et cela constitue l'idée de base de la présente invention, que moyennant certaines adaptations technologiques simples les fours annulaires à sole tournante pouvaient avantageusement être utilisés pour réaliser la régénération du charbon actif en poudre. La présente invention vise donc un procédé de régénération de charbon actif en poudre caractérisé par le fait que ladite régénération est réalisée dans un four annulaire à sole tournante.

La présente invention vise également le four utilisé pour la mise en oeuvre dudit procédé.

Le four selon l'invention est un four annulaire à sole tournante comportant, comme connu, des moyens d'alimentation en matériau à traiter (ici charbon actif en poudre), des moyens de décharge dudit matériau en fin de traitement, des moyens d'étanchéité et des moyens de chauffage.

Les caractéristiques spécifiques de ce four sont les suivantes :

- le déplacement de la sole s'effectue avec une vitesse contrôlée,
- le dispositif d'alimentation de la sole en charbon actif est étanche,
- le chauffage du four est réalisé à l'aide de dispositifs non générateurs de gaz,
- les moyens pour la réalisation de l'étanchéité entre le caisson extérieur du four et la sole sont avantageusement couplés avec les moyens nécessaires pour réaliser la trempe du charbon traité,
- le système d'évacuation des gaz générés pendant le traitement dans le four est situé, dans le four, au niveau des moyens permettant la décharge du charbon actif, ledit système d'évacuation assurant une circulation des gaz à co-courant par rapport au charbon,
- un système d'étanchéité est prévu, afin de stopper la circulation des gaz générés, entre les moyens d'alimentation et les moyens de décharge,
- enfin le four est équipé d'un dispositif, convenablement positionné, permettant l'injection de vapeur d'eau dans le four.

L'entraînement contrôlé du déplacement de la sole peut s'effectuer par divers moyens ; le moyen le plus simple est de rendre cette sole solidaire d'un certain nombre de galets dont l'un est entraîné par un moteur à variateur.

Les moyens étanches d'alimentation de la sole en charbon actif sont connus ; il convient simplement de faire en sorte que le système d'alimentation utilisé soit étanche et assure une répartition relativement régulière du charbon sur toute la largeur de la sole.

Les moyens de chauffage de la charge devront être choisis parmi ceux ne générant pas de gaz ; ainsi on peut avantageusement utiliser un chauffage par rayonnement.

Parmi les moyens utilisables pour réaliser une étanchéité suffisante entre le caisson fixe et le sole annulaire mobile, on emploiera de préférence un système de bavettes pendantes de part et d'autre de ladite sole ; chacune de ces bavettes trempe à son extrémité inférieure dans un canal contenant un liquide (eau). L'extrémité de chaque bavette peut avantageusement comporter un petit racleur ayant pour rôle de nettoyer le liquide et d'entraîner les particules de charbon actif qui auraient pu tomber dans chacun des canaux.

Les moyens permettant la décharge et la récupération du charbon actif traité peuvent être très divers. Les plus simples consistent à disposer à une certaine hauteur au-dessus de la sole un dispositif "racleur" qui entraînera la partie supérieure de la couche de charbon actif vers le (ou les) bord(s) de la sole, et fera tomber ledit charbon actif dans un dispositif de récupération qui est un bac de trempe rempli de liquide. Il est clair que de façon très avantageuse ce bac de trempe peut être combiné avec les dispositifs servant à réaliser l'étanchéité entre le caisson fixe et la sole mobile.

Pour stopper la circulation des gaz générés lors du traitement du charbon actif, on utilisera par exemple un abaissement localisé du plafond dudit caisson fixe, cet abaissement étant tel que ledit plafond vienne au voisinage immédiat du "lit mort" de charbon actif. Le "lit mort" de charbon actif est la couche de charbon actif qui demeure sur la sole, ladite couche recevant la couche de charbon actif qui est traité dans le four.

Les dispositifs d'injection de vapeur sont connus et seront intégrés dans le four ; on remarquera cependant que les gaz générés par la désorption du charbon actif étant humides et circulant à co-courant par rapport à la circulation du charbon actif, une atmosphère humide est automatiquement obtenue dans le four.

L'exemple non limitatif ci-après illustre l'invention.

Cet exemple fait référence aux figures 1, 2, 3 et 4 :

- la figure 1 est une vue schématique en plan du four selon l'invention ;

- la figure 2 est une coupe transversale selon II,II dudit four ;

- la figure 3 est une coupe longitudinale simplifiée selon III,III dudit four ;

- et la figure 4 est une coupe transversale partielle selon IV,IV dudit four.

Le four annulaire est constitué d'un caisson fixe (1) dans lequel se déplace une sole (2).

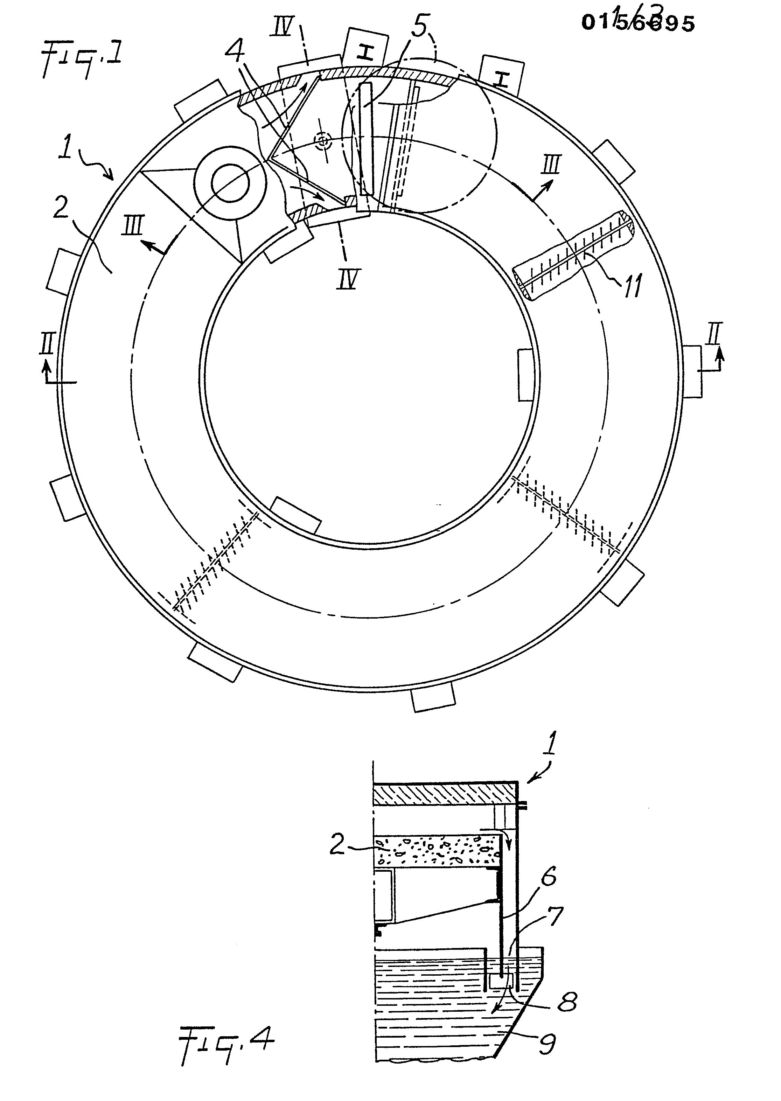

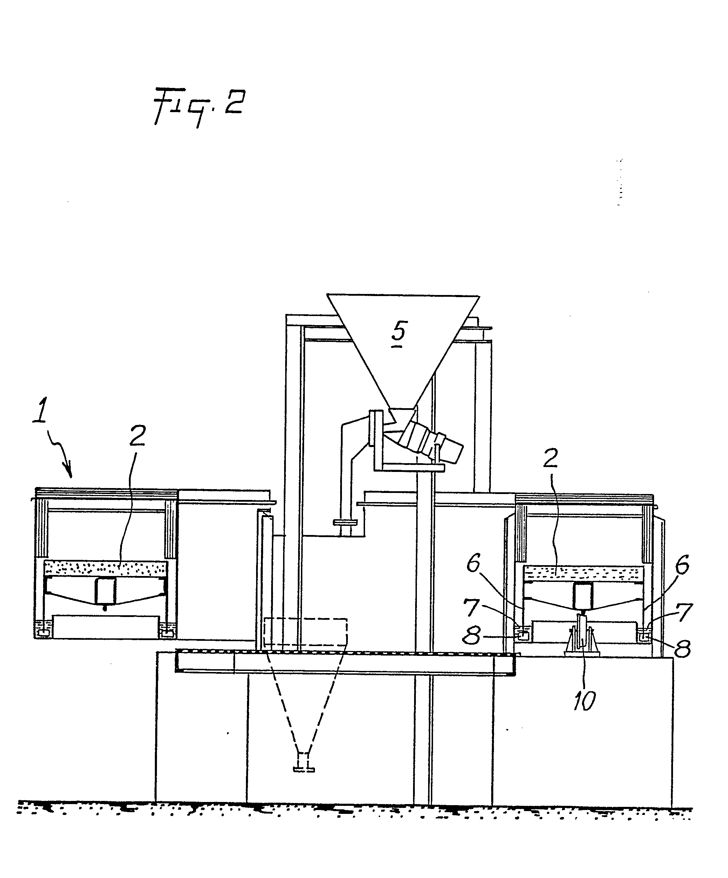

Cette sole est constituée par un plateau supérieur en béton réfractaire ; elle repose sur des galets (10) (cf. figure 2) dont un est entraîné par un système vario-moto-réducteur permettant d'assurer à la sole une vitesse de rotation contrôlée variable entre environ 0,5 et environ 1,5 tour par heure.

Le caisson peut être revêtu intérieurement de panneaux isolants réfractaires (fibres céramiques par exemple).

L'étanchéité entre le caisson et la sole est assurée par un système de bavettes (6) fixées de chaque côté de la sole et pendantes au-dessous de cette sole. Les bavettes trempent, dans leurs parties inférieures, dans des canaux (7) qui sont portées par la partie inférieure de la paroi extérieure du caisson. Ces canaux sont remplis d'un liquide (eau). On notera que la partie de chaque bavette qui trempe dans les canaux comporte des petits racloirs (8).

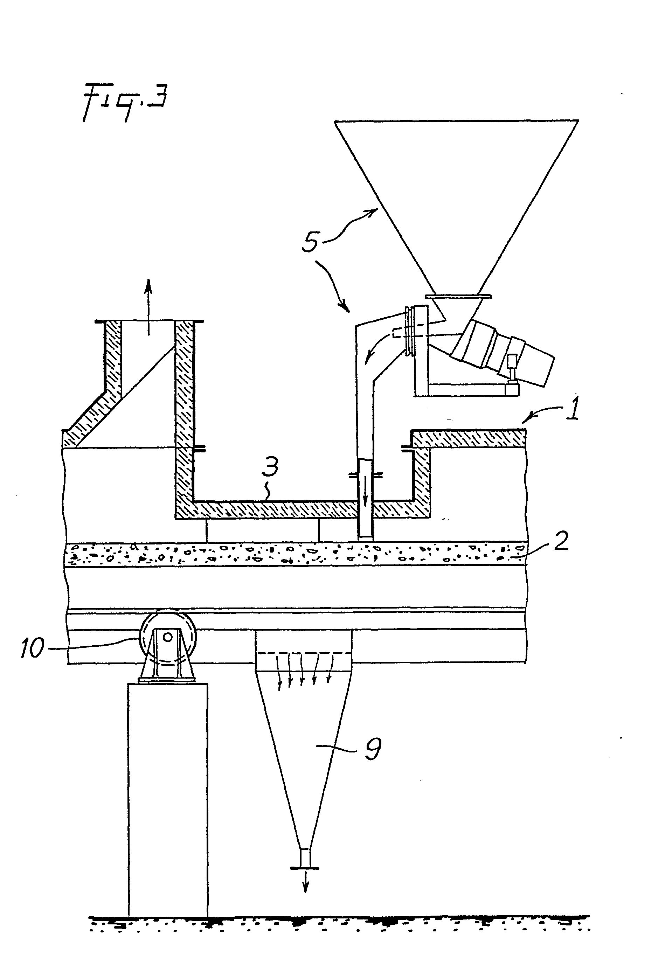

Le caisson présente un rétrécissement (3) situé à hauteur du système de décharge soc (4) et de l'alimentation (5) (cf. figure 3).

Ce rétrécissement a pour but de couper le cheminement annulaire des gaz afin que ceux générés dans la zone de séchage ne soient pas directement évacués vers la sortie du four par circulation à contre-courant.

En effet, les gaz doivent cheminer dans le sens de la matière, l'eau évaporée en zone de séchage étant utilisée dans la dernière zone de gazéification de carbone en fin de cycle, c'est-à-dire juste avant l'évacuation des gaz.

L'alimentation ici représentée par un appareil vibrant étanche peut évidemment être de n'importe quel type, pourvu qu'elle reste étanche et qu'elle permette une distribution sur la largeur de la sole.

Le système de décharge est constitué par un soc en forme de V qui, à la manière d'un soc de charrue, permet d'évacuer intérieurement et extérieurement le produit dans le bac de trempe. Ce soc est donc disposé à quelques millimètres de la sole, sur laquelle il reste du produit appelé "lit mort".

Le soc (4) en forme de V amène la couche supérieure du charbon actif traité sur les deux bords extérieurs et intérieurs de la sole et ce charbon tombe le long des bavettes (6) dans les canaux (7). Pour recevoir ledit charbon, les canaux ont été aménagés à l'endroit voulu et, comme suggéré sur la figure 4, le fond de chaque canal a été supprimé de façon à mettre en contact chacun des canaux avec un bac de réception (9) qui comporte un liquide de trempe (eau). L'évacuation du charbon refroidi contenu dans ledit bac de réception peut se faire au moyen d'un éjecteur hydraulique connu situé à la base de ce bac.

La répartition du produit sur la sole tournante ainsi que son retournement lent peuvent se faire au moyen de bras équipés de dents (11), disposées çà et là, suivant les applications.

Le chauffage est réalisé indirectement par tubes radiants équipés soit de brûleur (tubes de gros diamètre), soit de résistances électriques (tubes blindés, ou au carbure de silicium ou coulés).

La distribution de la chaleur se fait par répartition plus ou moins importante de ces tubes radiants en fonction des besoins des différentes zones fixées.

Le four, selon l'invention, est utilisable dans toute usine de récupération de charbon actif en poudre.

Ce four présente, sur le plan général, les avantages suivants :

- immobilité relative du produit pour réduire au maximum le taux d'envolement;
- utilisation d'un chauffage indirect ou dit "statique" pour réduire au minimum la quantité de gaz et donc réduire également les envolements;
- utilisation d'un système qui permette le défilement du produit dans une succession de zones que doit obligatoirement traverser le charbon pour être convenablement régénéré, à savoir :
  . zone de séchage pour déshydratation,
  . zone de montée en température,
  . zone de pyrolyse des matières volatiles,
  . zone de gazéification du carbone fixe,

et, par rapport aux systèmes actuellement connus pour la récupération du charbon actif en poudre (four à bande), il permet :

- une réduction de la surface d'implantation au sol ;
- de mettre toute la partie mécanique à l'abri des zones à haute température ;
- de simplifier les dispositifs d'étanchéité.

6

## REVENDICATIONS

1.  Procédé pour réaliser la régénération du charbon actif en poudre, caractérisé en ce que l'on utilise un four annulaire à sole tournante.

2.  Four utilisé pour la mise en oeuvre du procédé selon la revendication 1, ledit four étant constitué d'un caisson fixe (1) dans lequel se déplace une sole (2), une étanchéité (6, 7) étant réalisée entre ledit caisson et ladite sole, et comportant des moyens d'alimentation (5) en charbon actif et des moyens (4) de décharge dudit charbon, ledit four étant caractérisé en ce que :

- le déplacement de la sole s'effectue avec une vitesse contrôlée,
- le dispositif d'alimentation de la sole en charbon actif est étanche,
- le chauffage du four est réalisé à l'aide de dispositifs non générateurs de gaz,
- les moyens pour la réalisation de l'étanchéité entre le caisson extérieur du four et la sole sont avantageusement couplés avec les moyens nécessaires pour réaliser une trempe du charbon traité,
- le système d'évacuation des gaz générés pendant le traitement dans le four est situé, dans le four, au niveau des moyens permettant la décharge du charbon actif, ledit système d'évacuation assurant une circulation des gaz à co-courant par rapport au charbon,
- un système d'étanchéité est prévu, afin de stopper la circulation des gaz générés, entre les moyens d'alimentation et les moyens de décharge,
- enfin le four est équipé d'un dispositif, convenablement positionné, permettant l'injection de vapeur d'eau dans le four.

3.  Four selon la revendication 2, caractérisé en ce que le déplacement de la sole annulaire (2) est réalisé par des galets solidaires de ladite sole et dont l'un au moins est entraîné par un moteur convenable.

4.  Four selon l'une des revendications 2 et 3, caractérisé en ce que l'étanchéité entre le caisson et la sole est réalisée par des bavettes disposées aux extrémités de ladite sole et plongeant dans un canal contenant un liquide, la paroi externe dudit canal étant reliée à la paroi externe dudit caisson.

5.  Four selon l'une des revendications 2, 3 et 4, caractérisé en ce que la récupération du charbon actif déchargé est réalisée par chute dudit charbon dans ledit canal aménagé localement de façon à former un bac de réception.

**Fig.1**

**Fig.4**

Fig. 2

Fig.3

Office européen
des brevets

**RAPPORT DE RECHERCHE EUROPEENNE**

**0156695**

Numéro de la demande

EP  85 40 0364

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-1 218 675  (SALEM-BROSIUS)<br>* Figures 1-3 *<br><br>--- | 1,3 | F 27 B    3/16<br>C 01 B   31/08 |
| X | US-A-1 576 371  (F. SEEBER)<br>* Revendication 1; figure 3 *<br><br>--- | 1,2 | |
| A | FR-A-2 141 290<br>(DNEPRODZERZHINSKI INSTITUT)<br>* Figure 2 *<br><br>--- | 4 | |
| A | US-A-4 408 987  (J.F. OYLER)<br><br>----- | | |

DOMAINES TECHNIQUES
RECHERCHES (Int. Cl.4)

C 01 B   31/00
B 01 J    8/00
B 01 J   20/00
F 27 B    9/00
F 27 B   15/00

Le présent rapport de recherche a été établi pour toutes les revendications

| Lieu de la recherche | Date d'achèvement de la recherche | Examinateur |
|---|---|---|
| LA HAYE | 03-06-1985 | KESTEN W.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82